# EUROPÄISCHE PATENTANMELDUNG

(11) **EP 4 570 144 A1**
(43) Veröffentlichungstag der Anmeldung: **18.06.2025**
(21) Anmeldenummer: 24211191.2
(22) Anmeldetag: 06.11.2024
(51) Int. Cl.: A47J 36/06

(54) **DECKEL FÜR EIN GARGEFÄSS UND GARGERÄT MIT EINEM GARGEFÄSS UND EINEM DECKEL**

(30) Priorität: 12.12.2023 DE 102023134817
(71) Anmelder: Miele & Cie. KG, 33332 Gütersloh (DE)
(72) Erfinder: HÖLSCHER, Britta, 30167 Hannover (DE)

(57) **Zusammenfassung**

Ein Deckel (100) für ein Gargefäß weist
einen umlaufenden Rand (105) zum Einführen in eine Öffnung des Gargefäßes, einen Wrasenauslass (110) zum Durchlassen von Wrasen, wobei der Wrasenauslass (110) in dem Rand (105) des Deckels (100) angeordnet ist und durch das Gargefäß nicht verschlossen ist, wenn der Rand (105) bis zu einer ersten Tiefe in das Gargefäß eingeführt ist, und durch das Gargefäß verschlossen ist, wenn der Rand (105) bis zu einer zweiten Tiefe in das Gargefäß eingeführt ist, und eine an dem Rand (105) angeordnete Halteeinrichtung (115) auf, die ausgeformt ist um den Rand (105) wahlweise in der ersten Tiefe oder der zweiten Tiefe zu halten.

## Beschreibung

Die Erfindung betrifft einen Deckel für ein Gargefäß und ein Gargerät mit einem Gargefäß und einem Deckel gemäß den Hauptansprüchen.

Bei einem Gargefäßdeckel, der speziell für den Einsatz auf einem 2in1-Kochfeld, also einem Kochfeld mit Absaugung, konzipiert ist, geht es darum, den entstehenden Wrasen aus dem Innenraum des Gefäßes bei geschlossenem Deckel gezielt in eine Richtung zu der Absaugung abzuführen.

Der hier vorgestellte Ansatz stellt sich die Aufgabe, einen verbesserten Deckel für ein Gargefäß und ein verbessertes Gargerät mit einem Gargefäß und einem Deckel zu schaffen.

Erfindungsgemäß wird diese Aufgabe durch einen Deckel für ein Gargefäß und ein Gargerät mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einer verbesserten und definierten Wrasenleitung zum Abzugsschacht aus einer Energieeinsparung durch verschiedene Öffnungsszenarien eines Wrasenauslasses.

Ein Deckel für ein Gargefäß weist folgende Merkmale auf:
einen umlaufenden Rand zum Einführen in eine Öffnung des Gargefäßes;
einen Wrasenauslass zum Durchlassen von Wrasen, wobei der Wrasenauslass in dem Rand des Deckels angeordnet ist und durch das Gargefäß nicht verschlossen ist, wenn der Rand bis zu einer ersten Tiefe in das Gargefäß eingeführt ist, und durch das Gargefäß verschlossen ist, wenn der Rand bis zu einer zweiten Tiefe in das Gargefäß eingeführt ist; und
eine an dem Rand angeordnete Halteeinrichtung, die ausgeformt ist um den Rand wahlweise in der ersten Tiefe oder der zweiten Tiefe zu halten.

Der Deckel kann ein Verschlusselement für beispielsweise einen Topf sein. Gemäß einer Ausführungsform kann der Deckel aus Edelstahl oder teilweise aus Glas ausgeformt sein. Das Gargefäß kann ein Topf oder eine Pfanne sein. Der Wrasenauslass kann als Durchgangsöffnung zum Durchlassen von Wrasen ausgeformt sein. Die Halteeinrichtung kann es einem Nutzer ermöglichen, den Rand des Deckels unterschiedlich weit in das Gargefäß einzuführen. Je nach Tiefe kann der Wrasenauslass offengehalten werden oder durch eine gegenüberliegende Wand des Gargefäßes verschlossen sein. Dabei kann die zweite Tiefe größer als die erste Tiefe sein, sodass der Deckel bei der zweiten Tiefe weiter in das Gargefäß eingeführt ist als bei der ersten Tiefe. Vorteilhaft an diesem Ausführungsbeispiel ist ein einfaches Handling, einfache und kostengünstige Herstellung, verbesserte und definierte Wrasenleitung zu einem Abzugsschacht und eine Energieeinsparung durch verschiedene Öffnungsszenarien des Wrasenauslasses.

Im Vergleich zu einer festen Ausbuchtung oder Öffnung am Gargefäßrand oder am Deckelrand weist der Deckel aufgrund der Halteeinrichtung den Vorteil auf, dass der Wrasenauslass auch vollständig verschlossen werden kann. Zudem ist es nicht erforderlich ein Öffnen oder Verschließen der Wrasenöffnung durch ein Verdrehen des Deckels zu bewirken. Vorteilhafterweise lässt sich die Halteeinrichtung ohne aufwendige Klapp- und Öffnungs-/Schließmechanismen an dem Deckelrand, dem Deckelknauf oder dem Gargefäßrand realisieren.

Der Deckel kann ein Deckelement aufweisen, wobei der Rand umlaufend an dem Deckelement angeordnet sein kann. Das Deckelement kann einen Überstand über den Rand aufweisen. Das Deckelement kann als Teil des Deckels gemäß einem Ausführungsbeispiel flach ausgeformt sein, um eine Ansammlung des Wrasens an einer Stelle wo er nicht austreten soll zu vermeiden.

Der Wrasenauslass kann durch das Gargefäß teilweise verschlossen werden, wenn der Rand bis zu einer dritten Tiefe in das Gargefäß eingeführt wird. Die Halteeinrichtung kann ausgeformt sein, um den Rand wahlweise in der dritten Tiefe zu halten. Die dritte Tiefe kann zwischen der ersten Tiefe und der zweiten Tiefe liegen. So kann der Wrasen teilweise ausgelassen werden und gemäß einer Ausführungsform in der der Deckel schräg auf dem Gargefäß aufsitzt noch genauer in eine Richtung abgeführt werden.

Der Wrasenauslass kann zumindest ein Durchgangsloch durch den Rand aufweisen, das geöffnet ist, wenn der Rand bis zu der dritten Tiefe in das Gargefäß eingeführt ist. Ferner kann der Wrasenauslass zumindest ein weiteres Durchgangsloch durch den Rand aufweisen, das geschlossen ist, wenn der Rand bis zu der dritten Tiefe in das Gargefäß eingeführt ist. Das Durchgangsloch und das weitere Durchgangsloch können entlang einer Höhe des Rands versetzt zueinander angeordnet sein.

Der Wrasenauslass kann durch eine Mehrzahl von Durchgangslöchern durch den Rand ausgeformt sein. Der Wrasen kann so effektiv ausgeführt werden.

Beispielsweise kann das zumindest eine Durchgangsloch eine runde Form aufweisen. Das zumindest eine weitere Durchgangsloch kann eine längliche Form aufweisen Eine runde Form ist einfach zu reinigen. Eine längliche Form kann eine große Öffnung ermöglichen. Gemäß einer anderen Ausführungsform können die Durchgangslöcher beispielsweise und rechteckige, oder beispielsweise eine dreieckige, oder beispielsweise eine schlitzförmige Form aufweisen.

Die Halteeinrichtung kann für jede einführbare Tiefe eine Stufe ausformen. Gemäß einem Ausführungsbeispiel können zwei Stufen ausgeformt sein. Gemäß einem alternativen Ausführungsbeispiel können beispielsweise auch drei, vier oder mehr Stufen ausgeformt sein. So kann die Menge des Wrasens und die Menge der Energie die entlassen wird genauer kontrolliert werden.

Die Halteeinrichtung kann aus einem Blech aus Edelstahl ausgeformt sein. Eine Blechstärke des Blechs kann weniger als 0,5mm betragen. Gemäß einem alternativen Ausführungsbeispiel kann die Blechstärke des Blechs weniger als 0,7mm oder weniger als 1,0mm betragen. Aufgrund der dünnen Blechstärke lässt sich das Blech beim Einführen des Deckels in das Gargefäß verformen. Beispielsweise kann der Deckel umso weiter in das Gargefäß eingeführt werden, umso stärker das Blech verformt ist.

Die Halteeinrichtung kann eine Auflagefläche ausformen, die ausgeformt ist, um den Rand in der ersten Tiefe zu halten. Beispielsweise kann die Auflagefläche eine Schräge darstellen, die ein Eintauchen des Deckels in das Gargefäß verhindert.

Die Auflagefläche kann einen ersten Abstand zu dem Rand aufweisen, wenn der Rand bis zu der ersten Tiefe in das Gargefäß eingeführt ist, und einen zweiten Abstand zu dem Rand aufweist, wenn der Rand bis zu der zweiten Tiefe in das Gargefäß eingeführt ist, wobei der erste Abstand größer als der zweite Abstand ist. Im entspannten Zustand kann das Blech eine Biegung aufweisen, durch die die Auflagefläche ausgeformt werden kann. Durch die Auflagefläche kann ein überwindbarer Widerstand gegenüber einer Einführbewegung des Deckels in das Gargefäß ausgeformt werden. Wenn ein Nutzer den Deckel ohne Druck auf das Gargefäß aufsetzt, kann der Schenkel eine Auflagefläche für den Deckel an dem Rand des Gargefäßes ausformen. Dadurch kann verhindert werden, dass der Rand des Deckels weiter in das Gargefäß eintaucht.

Optional kann die Halteeinrichtung eine weitere Auflagefläche ausformen, die ausgeformt ist, um den Rand beispielsweise in der dritten Tiefe zu halten. Beispielsweise kann die Auflagefläche eine weitere Schräge darstellen, die ein weiteres Eintauchen des Deckels in das Gargefäß verhindert.

Die Halteeinrichtung kann eine Feder ausformen. Dadurch kann eine besonders einfache Handhabung des Deckels ermöglicht werden. Dadurch lasst sich die Halteeinrichtung beim Einführen in das Gargefäß elastisch verformen. Die Feder kann aus Edelstahl geformt und mit dem Deckelrand stoffschlüssig verbunden sein, beispielsweise fest verschweißt sein. Das kann die Lebensdauer erhöhen und sich leicht säubern lassen. Gemäß einem anderen Ausführungsbeispiel kann die Feder aber auch gesteckt, verschraubt oder genietet sein.

Die Halteeinrichtung kann eine weitere Feder ausformen. Die Federn können in Umfangsrichtung des Deckels beabstandet zueinander Dadurch kann ein Verkippen des Deckels vermieden werden. Der Wrasenauslass kann zwischen den Federn angeordnet sein. Auf diese Weise kann eine Öffnungsweite des Wrasenauslasses präzise eingestellt und gehalten werden.

Die Halteeinrichtung kann ein Wrasenleitelement aufweisen. Beispielsweise kann das Wrasenleitelement ein Wrasenleitblech sein. Das Wrasenleitelement kann zur zielgerichteten Leitung des Wrasens ausgebildet sein. Optional kann das Wrasenleitelement die Federn verbinden. Dadurch kann eine hohe Stabilität der Halteeinrichtung erreicht werden.

Ferner wird ein Gargerät mit einem Gargefäß und einem Deckel vorgestellt. Das Gargerät kann gemäß einem Ausführungsbeispiels ein Topf sein.

Auch wenn der beschriebene Ansatz anhand eines Haushaltgeräts beschrieben wird, kann der hier beschriebene Ansatz entsprechend im Zusammenhang mit einem gewerblichen oder professionellen Gerät, eingesetzt werden.

Ein Ausführungsbeispiel der Erfindung ist in den Zeichnungen rein schematisch dargestellt und wird nachfolgend näher beschrieben. Es zeigt
- Figur 1: eine perspektivische Darstellung eines Ausführungsbeispiels eines Deckels;
- Figur 2: eine perspektivische Darstellung eines Ausführungsbeispiels eines Deckels;
- Figur 3: eine Schnittdarstellung eines Ausführungsbeispiels eines Deckels;
- Figur 4: eine Seitenansicht eines Ausführungsbeispiels eines Deckels;
- Figur 5: eine Draufsicht eines Ausführungsbeispiels eines Deckels;
- Figur 6: eine perspektivische Darstellung eines Ausführungsbeispiels eines Gargeräts;
- Figur 7: eine weitere seitliche Darstellung eines Ausführungsbeispiels eines Gargeräts;
- Figur 8: eine Seitenansicht eines Ausführungsbeispiels eines Gargeräts;
- Figur 9: eine weitere perspektivische Darstellung eines Ausführungsbeispiels eines Gargeräts;
- Figur 10: eine weitere seitliche Darstellung eines Ausführungsbeispiels eines Gargeräts;
- Figur 11: eine weitere Seitenansicht eines Ausführungsbeispiels eines Gargeräts;
- Figur 12: eine weitere perspektivische Darstellung eines Ausführungsbeispiels eines Gargeräts; und
- Figur 13: eine weitere perspektivische Darstellung eines Ausführungsbeispiels eines Gargeräts.

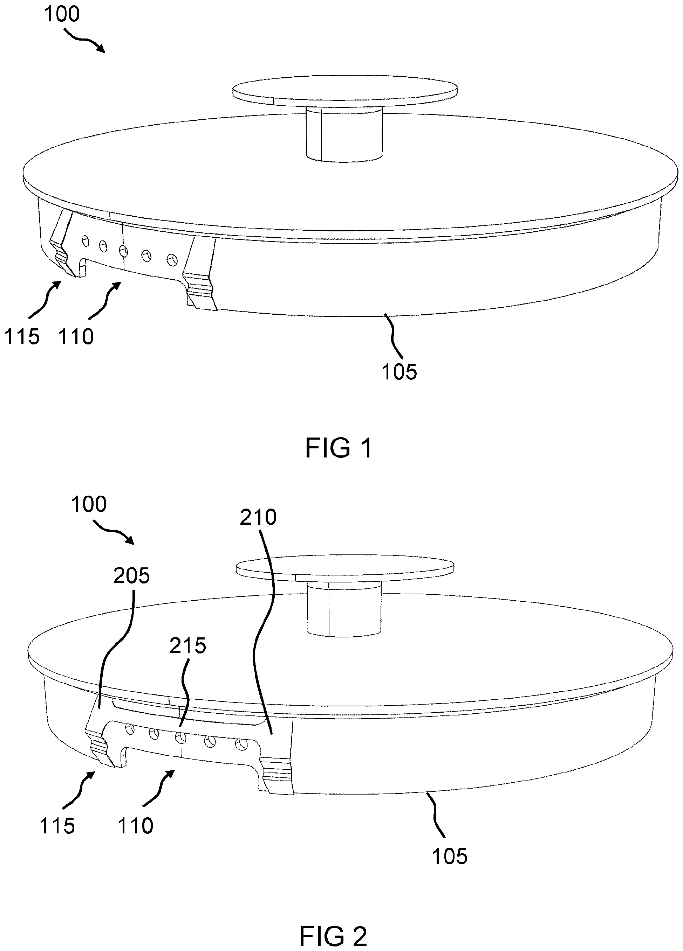

Figur 1 zeigt eine perspektivische Darstellung eines Ausführungsbeispiels eines Deckels 100. Der Deckel 100 ist gemäß eines Ausführungsbeispiels rund und weist einen umlaufenden Rand 105 zum Einführen in ein Gargefäß auf. Der Deckel 100 kann gemäß eines Ausführungsbeispiel eine Glasfläche umfassen oder gemäß einem anderen Ausführungsbeispiel komplett aus Edelstahl bestehen.

Im Rand 105 ist ein Wrasenauslass 110 zum Durchlassen von Wrasen angeordnet. Der Wrasenauslass 110 wird durch das Gargefäß nicht verschlossen, wenn der Rand 105 bis zu einer ersten Tiefe in das Gargefäß eingeführt ist. Dies ist beispielsweise der Fall, wenn der Rand 105 des Deckels 100 zumindest im Bereich des Wrasenauslasses 110 auf einer Wand des Gargefäßes aufliegt. Der Wrasenauslass 110 wird durch das Gargefäß verschlossen, wenn der Rand 105 bis zu einer zweiten Tiefe in das Gargefäß eingeführt ist, Dies ist beispielsweise der Fall, wenn der Rand 105 des Deckels 100 vollständig in das Gargefäß eingeführt ist. Optional wird der Wrasenauslass 110 durch das Gargefäß verschlossen, wenn der Rand 105 bis zu einer zwischen der ersten Tiefe und der zweiten Tiefe liegenden dritten Tiefe in das Gargefäß eingeführt ist

Die Halteeinrichtung 115 ist am Rand 105 angeordnet und ist dazu ausgeformt um den Rand 105 wahlweise in der ersten Tiefe oder der zweiten Tiefe zu halten. Gemäß einem Ausführungsbeispiel ist die Halteeinrichtung 115 ausgeformt, um den Rand 105 in der ersten Tiefe zu halten, wenn ein Nutzer den Deckel 100 nur auf das Gargefäß auflegt. Dagegen ist die Halteeinrichtung 115 ausgeformt, um den Rand 105 in der zweiten Tiefe zu halten, wenn der Nutzer den Deckel 100 mit etwas Druck bist zu der zweiten Tiefe in das Gargefäß eingeführt hat.

Optional umfasst die Halteeinrichtung 115 zwei Teilabschnitte und der Wrasenauslass 110 ist zwischen den zwei Teilabschnitten der Halteeinrichtung 115 angeordnet.

Figur 2 zeigt eine perspektivische Darstellung eines Ausführungsbeispiels eines Deckels 100. Der Deckel 100 weist entsprechend zu dem anhand von Figur 1 beschriebenen Deckel die Halteeinrichtung 115 und den Wrasenauslass 110 auf. Die die Halteeinrichtung 115 formt zumindest eine Feder 205 aus. Gemäß des hier beschriebenen Deckels 100 formt die Halteeinrichtung 115 die Feder 205 und eine separate zweite Feder 210 aus.

Im Unterschied zu dem anhand von Figur 1 beschriebene Ausführungsbeispiel formt die Halteeinrichtung 115 zusätzlich ein Wrasenleitelement 215 aus. Beispielsweise ist das Wrasenleitelement 215 zwischen den Federn 205, 210 angeordnet und verbindet die Federn 205, 210 miteinander.

Gemäß einem Ausführungsbeispiel umfasst das Wrasenleitelement 215 einen Steg, durch den ein Schlitz zwischen dem Steg und einem Überstand des Deckels 100 ausgeformt wird. Der Wrasen kann durch den Schlitz gerichtet abgeleitet werden.

Die Halteeinrichtung 115 ist gemäß einem Ausführungsbeispiel aus Edelstahl ausgeformt. Gemäß einem alternativen Ausführungsbeispiel ist die Halteeinrichtung 115 oder sind zumindest die Federn 205, 210 aus Kunststoff oder einer Mischung aus Metall und Kunststoff ausgeformt.

Gemäß einem Ausführungsbeispiel hat der Deckel 100 mit verschiedenen Positionen und dem beispielsweise als ein Wrasenleitblech ausgeformten optionalen Wrasenleitelement 215 verschiedene Nutzungsszenarien, beispielsweise geschlossen, halb offen und ganz offen. Durch diese Nutzungsszenarien kann eine Energieeinsparung durch die verschiedenen Öffnungsszenarien des Wrasenauslasses 110 erreicht werden. Gemäß eines Ausführungsbeispiels trägt das Wrasenleitblech ebenfalls zur zielgerichteteren Leitung des Wrasens bei.

Der Deckel 100 weist gemäß einem Ausführungsbeispiel keine Kunststoffteile auf. Dies sorgt für ein wertiges Erscheinungsbild, eine lange Nutzungsdauer und Nachhaltigkeit, welche dem Deckel 100 eine gute Recyclefähigkeit zuschreibt. Gemäß eines Ausführungsbeispiels ohne Kunststoff wird eine kostengünstige Fertigung ermöglicht. Durch die Halteeinrichtung 115 wird ein einfaches Handling und eine einfache Nutzung des Deckels 100, durch Zu- und Andrücken des Deckels 100 ermöglicht. Ferner ist eine einfache Reinigung in der Spülmaschine möglich.

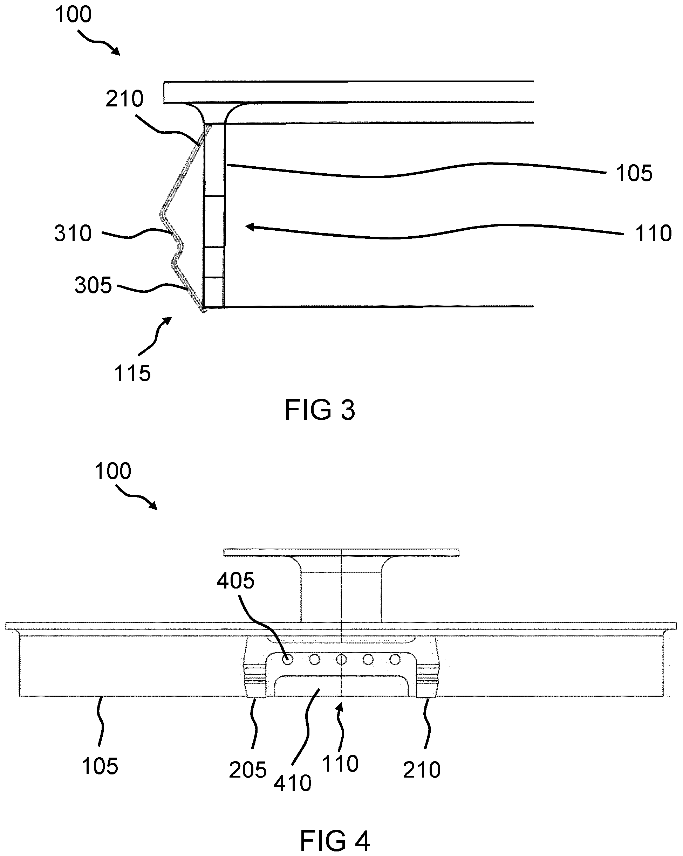

Figur 3 zeigt eine Schnittdarstellung eines Ausführungsbeispiels eines Deckels 100, beispielsweise des anhand von vorherigen Figuren beschriebenen Deckels mit oder ohne Wrasenleitelement.

Der Deckel 100 weist den Rand 105 mit der Halteeinrichtung 115 auf, wobei die Halteeinrichtung 115 gemäß einem Ausführungsbeispiel die Feder 210 ausformt. Aufgrund der Feder 210 lässt sich die Halteeinrichtung 115 verformen, abhängig davon, wie weit der Rand 105 in das Gargefäß eingeführt wird.

Die Feder 210 formt zumindest eine Auflagefläche 305 auf. Wenn der Deckel 100 ohne Druck auf das Gargefäß aufgesetzt wird, wird der Deckel 100 durch die Auflagefläche 305 in einer Position gehalten, in der der Rand 105 nur bis zu der ersten Tiefe in das Gargefäß eintaucht. Dadurch wird der Wrasenauslass 100 nicht durch den Rand des Gargefäßes verschlossen.

Wenn der Deckel 100 mit Druck auf das Gargefäß aufgesetzt wird, wird die Feder 210 soweit verformt, dass die Auflagefläche 305 überwunden und der Rand tiefer in das Gargefäß eintaucht, beispielsweise bis zu der zweiten Tiefe, bei der der Wrasenauslass 110 durch den Rand des Gargefäßes verschlossen wird.

Optional formt die Feder 210 eine weitere Auflagefläche 310 auf. Wenn der Deckel 100 mit Druck auf das Gargefäß aufgesetzt und die Auflagefläche 305 überwunden wird, bietet die weitere Auflagefläche 310 einen weiteren Widerstand der einem weiteren Einführen des Deckels 100 in das Gargefäß entgegensteht. Dadurch kann der Deckel 100 von der weiteren Auflagefläche 310 in einer weiteren Position gehalten werden, in der der Rand 105 beispielsweise bis zu der dritten Tiefe in das Gargefäß eintaucht, bei der der Wrasenauslass 110 durch den Rand des Gargefäßes nur teilweise verschlossen wird.

Bei einem weiteren Druck wird auch die weitere Auflagefläche 310 überwunden, sodass der Rand 105 beispielsweise vollständig in das Gargefäß eintaucht.

Zum Ausformen der Auflageflächen 305, 310 weist die Feder 210 beispielsweise mehrere Biegungen auf. Gemäß einem alternativen Ausführungsbeispiel weist die Feder 210 beispielsweise drei Auflageflächen oder beispielsweise vier Auflageflächen auf.

Figur 4 zeigt eine Seitenansicht eines Ausführungsbeispiels eines Deckels 100, wie er anhand der vorangegangenen Figuren beschrieben ist. Gemäß einem Ausführungsbeispiel weist der Deckel 100 einen Wrasenauslass 110 auf, welcher durch zumindest ein Durchgangsloch 405, hier durch eine Mehrzahl an Durchgangslöchern 405, beispielsweise auch Löcher genannt, zum Auslassen des Wrasens ausgeformt ist. Gemäß einem Ausführungsbeispiel weisen die Durchgangslöcher 405 eine runde Form auf. Gemäß einem anderen Ausführungsbeispiel können die Durchgangslöcher 405 beispielsweise eine rechteckige, oder beispielsweise eine dreieckige, oder beispielsweise eine längliche, schlitzartige Form aufweisen. Die Durchgangslöcher 405 sind beispielhaft auf einer gemeinsamen Höhe des Rands 105 in einer Reihe angeordnet.

Zusätzlich oder alternativ weist der Wrasenauslass 110 ein weiteres Durchgangsloch 410 auf, das hier beispielsweise als ein Langloch ausgeführt ist.

Das weitere Durchgangsloch 410 und das zumindest eine Durchgangsloch 405 sind auf unterschiedlichen Höhen des Rands 105 angeordnet, sodass beim Aufsetzten des Deckels 100 auf das Gargefäß zunächst beide Durchgangslöcher 405, 410 geöffnet sind. Bei einem Einführen des Rands 105 in das Gargefäß wird zunächst das weitere Durchgangsloch 410 verschlossen und anschließend bei einem weiteren Einführen des Rands 105 in das Gargefäß wird auch das Durchgangsloch 405 verschlossen.

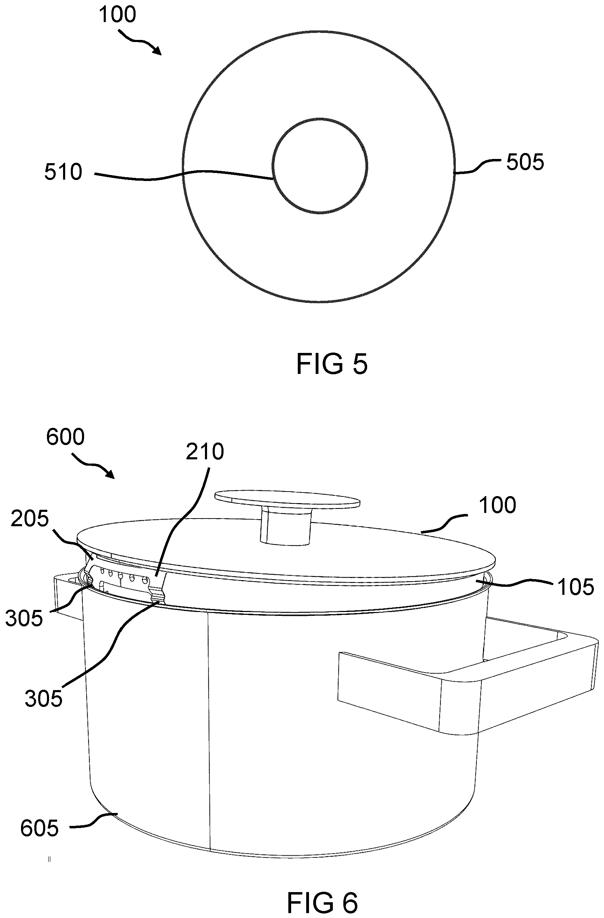

Figur 5 zeigt eine Draufsicht eines Ausführungsbeispiels eines Deckels 100, beispielsweise des anhand von vorherig Figuren beschriebenen Deckels. Der Deckel 100 weist ein Deckelement 505 auf an welchem der Rand angeordnet ist. Zusätzlich ist ein Griff 510 an dem Deckelement 505 angeordnet. Der Deckel 100 weist eine runde Form auf, welche sich leicht mit anderen Gargefäßen verwenden lässt.

Figur 6 zeigt eine perspektivische Darstellung eines Ausführungsbeispiels eines Gargeräts 600. Es zeigt ein Gargerät 600 mit einem Gargefäß 605 und einem Deckel 100, gemäß den Beschreibungen der Figuren 1 bis 5. In dem in Figur 6 gezeigten Zustand wird der Deckel 100 von der Halteeinrichtung, hier von den beiden Federn 205, 210 in der ersten Tiefe gehalten. Das bedeutet, dass der Deckel 100 das Gargefäß 605 nicht vollständig verschließt und der Wrasen ungehindert aus dem Wrasenauslass 110 austreten kann.

Der Deckel 100 liegt auf den ersten Auflageflächen 305 der Federn 205, 210 auf. Die Federn 205, 210 können gemäß einem Ausführungsbeispiel aus Blech ausgeformt sein. Das Blech ist gebogen und formt angrenzend an einen Scheitelpunkt die jeweilige erste Auflagefläche 305 aus, die wiederum ausgeformt ist, um den Rand 105 in der ersten Tiefe zu halten.

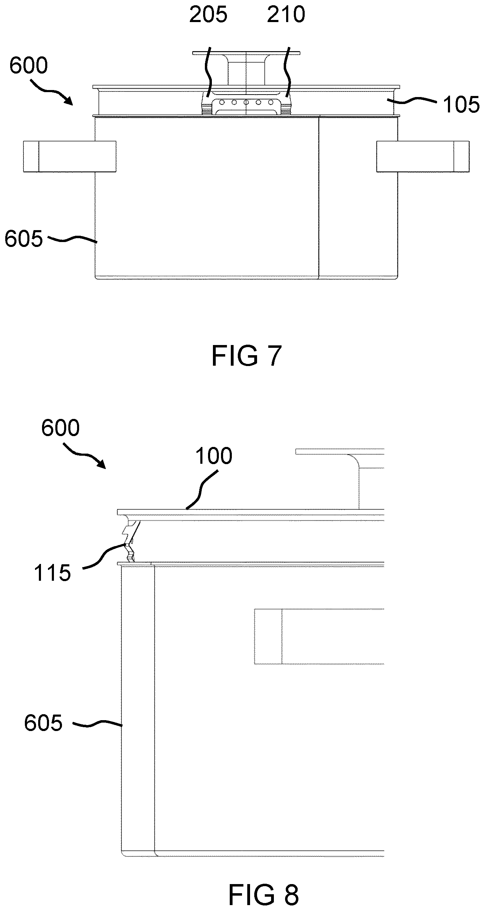

Figur 7 zeigt eine weitere seitliche Darstellung eines Ausführungsbeispiels eines Gargeräts 600, beispielsweise des anhand von Figur 6 beschriebenen Gargeräts. Wie in Figur 6 wird das Gargefäß 605 mit dem Deckel 100 in offener Stellung gezeigt. Dazu halten die Federn 205, 210 den Rand 105 in der ersten Tiefe.

Figur 8 zeigt eine Seitenansicht eines Ausführungsbeispiels eines Gargeräts 600, beispielsweise des anhand von vorherigen Figuren beschriebenen Gargeräts 600. Der Deckel 100 befindet sich hier gehalten durch die Halteeinrichtung 115 in offener Stellung.

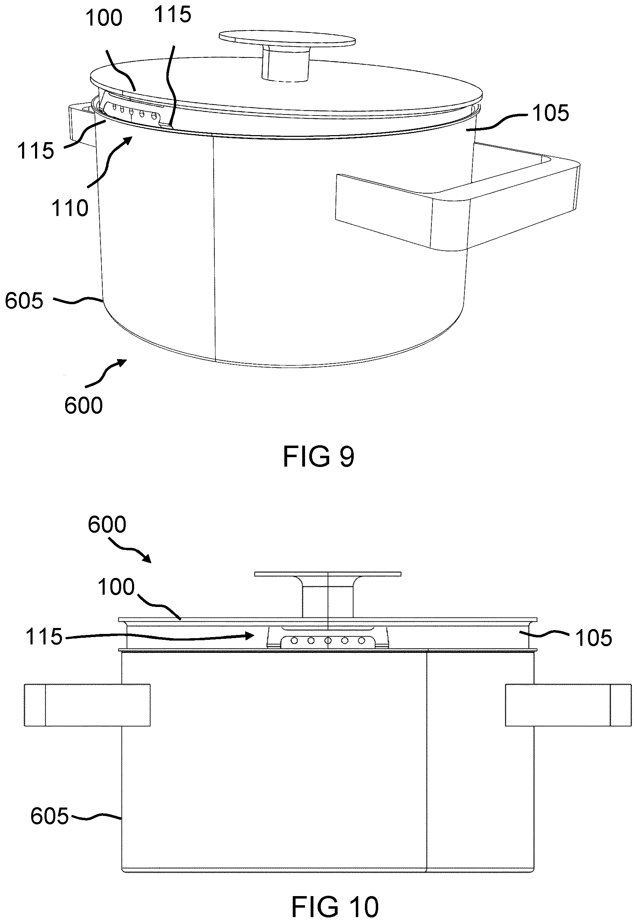

Figur 9 zeigt eine weitere perspektivische Darstellung eines Ausführungsbeispiels eines Gargeräts 600, beispielsweise des anhand von vorherigen Figuren beschriebenen Gargeräts. Eine Wand des Gargefäßes 605 verschließt den Wrasenauslass 110 teilweise, da der Rand 105 des Deckels 100 über die in Figur 7 dargestellte Tiefe hinaus weiter in das Gargefäß 605 eingeführt ist.

Gemäß einem Ausführungsbeispiel wird der Rand 105 von der Halteeinrichtung 115 in einer dritten Tiefe gehalten. Der Deckel 100 ist somit halboffen.

Gemäß einem Ausführungsbeispiel ist es möglich den Deckel 100 parallel zu dem Gargefäß 605 aufzusetzen, wie es beispielsweise in Figur 8 gezeigt ist, oder aber schräg auf dem Gargefäß 605 aufzusetzen, wie es in Figur 9 gezeigt ist.

Figur 10 zeigt eine weitere seitliche Darstellung eines Ausführungsbeispiels eines Gargeräts 600, beispielsweise des anhand von vorherigen Figuren beschriebenen Gargeräts. Der Deckel 100 ist halboffen und lässt Wrasen teilweise aus dem Gargefäß 605 austreten. Die Halteeinrichtung 115 hält den Rand 105 dabei in einer dritten Tiefe.

Die Halteeinrichtung 115 ist gemäß einem Ausführungsbeispiel aus einem Blech aus Edelstahl ausgeformt und eine Blechstärke des Blechs beträgt weniger als 0,5mm. Das Blech weist dabei an einem Scheitelpunkt einen ersten Abstand zu dem Rand 105 auf, wenn der Rand 105 bis zu der ersten Tiefe in das Gargefäß 605 eingeführt ist, und einen zweiten Abstand zu dem Rand 105 aufweist, wenn der Rand 105 bis zu der zweiten Tiefe in das Gargefäß 605 eingeführt ist, wobei der erste Abstand größer als der zweite Abstand ist.

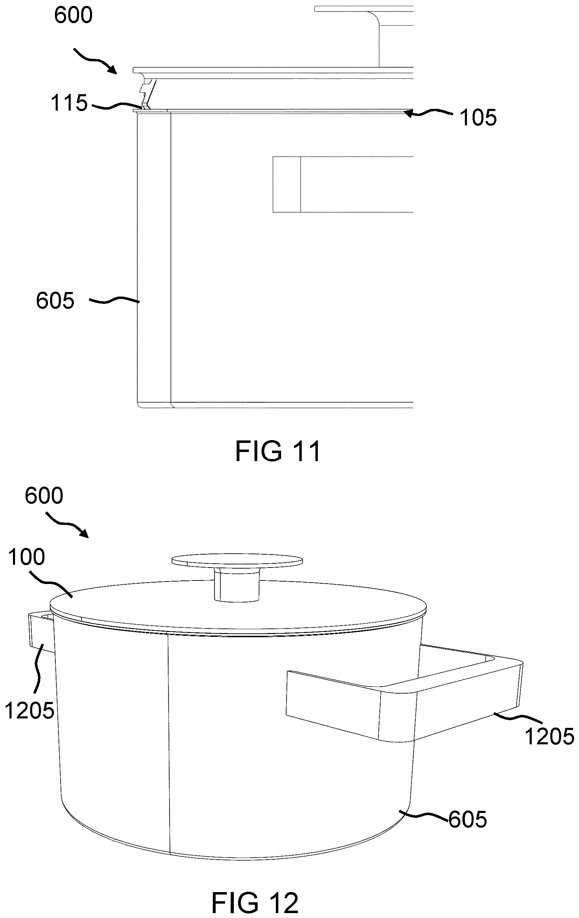

Figur 11 zeigt eine weitere Seitenansicht eines Ausführungsbeispiels eines Gargeräts 600, beispielsweise des anhand von vorherig beschriebenen Figuren. Die Halteeinrichtung 115 hält den Rand 105 in der dritten Tiefe, dadurch ist der Wrasenauslass teilweise durch das Gargefäß 605 verschlossen und bleibt halboffen.

Figur 12 zeigt eine weitere perspektivische Darstellung eines Ausführungsbeispiels Gargeräts 600, wie es anhand der vorangegangenen Figuren beschrieben ist. Das Gargefäß 605 ist durch den Deckel 100 verschlossen. Damit befindet sich der Rand des Deckels beispielsweise in der zweiten Tiefe, in der der Wrasenauslass vollständig verschlossen ist.

Entsprechend bekannter Töpfe weist das Gargefäß 605 optional zwei Henkel 1205 auf.

Der Deckel 100 stellt einen variablen Topfdeckel dar, der sich ohne viel Aufwand mit Druck in die verschiedenen Positionen versetzen lässt, in denen der Wrasenaulass mehr oder weniger geschlossen ist. Dies geschieht durch Andrücken oder Anheben des Deckels 100.

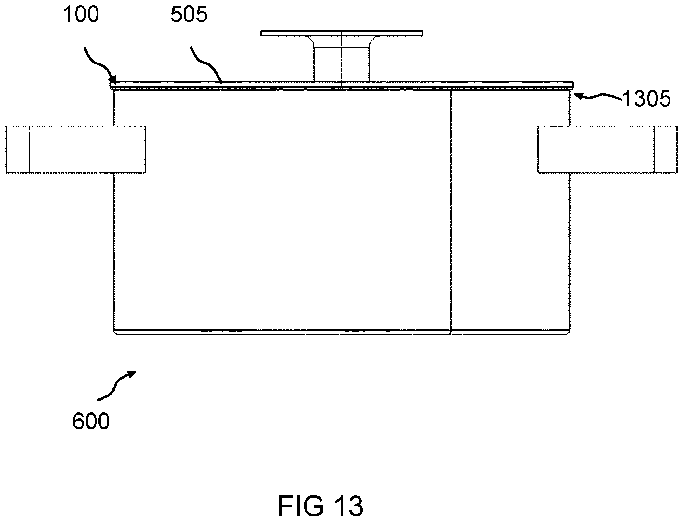

Figur 13 zeigt das in Figur 12 dargestellte Gargerät 600 in einer Seitenansicht. Der Deckel 100 weist ein Deckelement 505 auf, wobei der Rand umlaufend an dem Deckelement 505 angeordnet ist. Das Deckelement 505 weist einen Überstand 1305 über den Rand auf, welcher das Gargefäß 605 im geschlossenen Zustand komplett verschließt. Dazu liegt der Überstand auf der Wand des Gargefäßes 605 auf.

Im Folgenden werden anhand der vorangegangenen Figuren Ausführungsbeispiele detailliert beschrieben.

Gemäß dem hier beschriebenen Ansatz wird nur der eine Deckel 100 für verschiedene Nutzungsszenarien beim Kochen verwendet. Dabei wird beispielhaft zwischen folgenden Nutzungsszenarien unterschieden:
1. Deckel 100 ist "offen" - ausreichend Wrasen kann austreten und wird beispielsweise gezielt zu einem Schacht eines im Kochfeld angeordneten Abzugs geleitet.
2. Deckel 100 ist "halboffen" - weniger Wrasen, ca. 50%, kann austreten und wird gezielt zum Schacht geleitet.
3. Deckel 100 ist komplett geschlossen - kein Wrasen tritt aus.

Der Nutzer kann jederzeit zwischen den verschiedenen Nutzungsszenarien durch sehr einfache Handhabung während des Kochprozesses, auch wenn der Deckel 100 heiß ist, wechseln. Ein "Umbauen" oder Verändern des Deckels 100, Klappen oder Drehen von irgendwelchen Öffnungsmechanismen, ist dazu nicht erforderlich.

Stattdessen kann der Nutzer durch einfaches Auflegen oder Andrücken des Deckels 100 auf das Gargefäß 605 die verschiedenen Nutzungsszenarien darstellen. Wird der Deckel 100 "lose" aufgelegt und werden die Wrasenausgangslöcher oder -schlitze des Wrasenauslasses 110 zum Schacht in der Mitte des Kochfelds ausgerichtet, tritt Wrasen zielgerichtet aus und kann abgeführt werden. Dies wird in den Figuren 6 bis 8 dargestellt.

Drückt der Nutzer den Deckel 100 in dieser Position etwas fester auf den Topf, ist nur noch ca. die Hälfte, also 50%, der Wrasenöffnung geöffnet und weniger Wrasen und damit Hitze und damit Energie kann aus dem Topf entweichen. Diese Position wird für viele Kochprozesse vom Abführen des Wrasens völlig ausreichend sein, es kann dadurch Energie eingespart werden, weil nicht so viel Hitze entweichen kann, entsprechend der Beschreibungen der Figuren 9 bis 11.

Drückt der Nutzer den Deckel 100 sehr fest auf, sind die Wrasenöffnungen des Wrasenauslasses 110 komplett geschlossen und gar kein Wrasen tritt aus und damit auch deutlich weniger Hitze und Energie. Vergleich mit den Beschreibungen der Figuren 12 und 13.

Je nach Situation im Kochprozess kann der Nutzer sehr einfach zwischen den verschiedenen Modi hin- und herwechseln und den Kochprozess wie auch den Energieverbrauch individuell, situativ und sehr effizient steuern.

Die Umsetzung dieser Funktion befindet sich lediglich am Deckel 100, beziehungsweise. sogar am Deckelrand, hier als Rand 105 bezeichnet, des Deckels 100. Der Deckel 100 kann dabei eine Glasfläche eingefasst haben oder komplett aus Edelstahl bestehen. Im Idealfall besteht der Rand 105 aus Edelstahl. Am Gargefäß 605, im Folgenden auch Topf 605 genannt, sind keinerlei Veränderungen notwendig, so dass dieser Deckel 100 sehr flexibel auf verschiedenen Gargefäßen eingesetzt werden kann, vorausgesetzt der Innendurchmesser passt.

An dem auch als Deckelinnenrand bezeichneten Rand 105 befinden sich an einer Seite der Wrasenauslass 110 oder mehrere Wrasenauslässe. Diese können in verschieden Formen ausgeprägt sein: Löcher oder Langlöcher in verschiedenen Formen und Größen, Quadrate, Dreiecke oder eine durchgängige Linie oder Aussparung, dargestellt in den Figuren 1 bis 4.

Links und rechts dieses Wrasenauslasses 110 befinden sich gemäß einem Ausführungsbeispiel Federn 205, 210, welche aus Edelstahl ausgeformt sein können, die verhindern, dass der Topfdeckel 100 komplett in den Topf 605 hineinfällt, gezeigt in den Figuren 6 bis 11. Diese Federn 205, 210 können gegebenenfalls auch aus einem anderen Material, beispielsweise Kunststoff, oder einer Materialkombination, wie Kunststoff und Edelstahl, bestehen. Wichtig ist eine genaue Anpassung der Geometrie an den Topfdeckel 100 und den Topfinnendurchmesser, damit eine sehr definierte Position gewährleistet ist. Der Deckel 100 wird wahrscheinlich in geneigter Position auf dem Topfrand aufliegen, beschrieben in den Figuren 6 und 9, das ist aber sogar vorteilhaft, da so auch der Wrasen im Topf 605 schon in Richtung Wrasenauslass 110 geleitet wird.

Optional sind die beiden Federn 205, 210 mittig im oberen Bereich verbunden. Dadurch ergibt sich ebenfalls eine verbesserte Wrasenleitung in Richtung des Abzugsschachts, wie es in Figur 2 beschrieben ist.

Durch die Geometrie der Federn 205, 210 können verschiedene "Stufen", also Auflageflächen 310, 315 und Höhen des Spaltes, abgebildet sein. In diesem Fall sind zwei dargestellt, in den Figuren 3 und 6 bis 11, es kann aber auch nur eine Stufe oder aber auch drei oder vier Stufen dargestellt sein. Das hängt von den Anforderungen des Produktes ab.

Die Dicke und Federkraft der Federn 205, 210 können sehr differenziert mit dem Deckel 100 und dem dazugehörigen Topf 605 entwickelt werden. Das ist in Konstruktionen mit Federn aber grundsätzlich so und sollte keine besonders hohe Anforderung stellen.

Die Federn 205, 210 sind vorzugsweise aus Edelstahl und mit dem Rand 105 fest verschweißt. Das erhöht die Lebensdauer und ermöglicht eine gute Reinigbarkeit, dadurch dass es keine Spalte oder Ähnliches gibt. Gegebenenfalls können die Federn 205, 210 aber auch gesteckt, verschraubt oder genietet sein.

Der Durchmesser des Deckels 100 ist gemäß einem Ausführungsbeispiel etwas geringer, als der Innendurchmesser des Topfes 605, damit der Deckelinnenrand und die eingeklappte Feder 205, 210 mit einem Federstahl welches beispielsweise. 0,2mm Blechstärke hat, gut zusammenpasst. Der Nutzer soll den Deckel 100 mit einem definierten, gut handhabbaren Druck aufdrücken und damit schließen können. Der Deckel 100 soll in den anderen beiden Auflagepositionen, 1 und 2, aber auch sicher aufliegen.

## Patentansprüche

1. Deckel (100) für ein Gargefäß (605), wobei der Deckel (100) folgende Merkmale aufweist:
einen umlaufenden Rand (105) zum Einführen in eine Öffnung des Gargefäßes (605);
einen Wrasenauslass (110) zum Durchlassen von Wrasen, wobei der Wrasenauslass (110) in dem Rand (105) des Deckels (100) angeordnet ist und durch das Gargefäß (605) nicht verschlossen ist, wenn der Rand (105) bis zu einer ersten Tiefe in das Gargefäß (605) eingeführt ist, und durch das Gargefäß (605) verschlossen ist, wenn der Rand (105) bis zu einer zweiten Tiefe in das Gargefäß (605) eingeführt ist; und
eine an dem Rand (105) angeordnete Halteeinrichtung (115), die ausgeformt ist um den Rand (105) wahlweise in der ersten Tiefe oder der zweiten Tiefe zu halten.

2. Deckel (100) gemäß Anspruch 1, mit einem Deckelement (505), wobei der Rand (105) umlaufend an dem Deckelement (505) angeordnet ist, wobei das Deckelement (505) einen Überstand (1305) über den Rand (105) aufweist.

3. Deckel (100) gemäß einem der vorangegangenen Ansprüche, wobei der Wrasenauslass (110) durch das Gargefäß (605) teilweise verschlossen ist, wenn der Rand (105) bis zu einer dritten Tiefe in das Gargefäß (605) eingeführt ist, und wobei die Halteeinrichtung (115) ausgeformt ist, um den Rand (105) wahlweise in der dritten Tiefe zu halten.

4. Deckel (100) gemäß Anspruch 3, wobei der Wrasenauslass (110) zumindest ein Durchgangsloch (405) durch den Rand (105) aufweist, das geöffnet ist, wenn der Rand (105) bis zu der dritten Tiefe in das Gargefäß (605) eingeführt ist, und zumindest ein weiteres Durchgangsloch (410) durch den Rand (105) aufweist, das geschlossen ist, wenn der Rand (105) bis zu der dritten Tiefe in das Gargefäß (605) eingeführt ist.

5. Deckel (100) gemäß Anspruch 4, wobei das zumindest eine Durchgangsloch (405) eine runde Form aufweist und/oder das zumindest eine weitere Durchgangsloch (410) eine längliche Form aufweist.

6. Deckel (100) gemäß einem der vorangegangenen Ansprüche, wobei die Halteeinrichtung (115) für jede einführbare Tiefe eine Stufe ausformt.

7. Deckel (100) gemäß einem der vorangegangenen Ansprüche, wobei die Halteeinrichtung (115) aus einem Blech aus Edelstahl ausgeformt ist und eine Blechstärke des Blechs weniger als 0,5mm beträgt.

8. Deckel (100) gemäß einem der vorangegangenen Ansprüche, wobei die Halteeinrichtung (115) eine Auflagefläche (305) ausformt, die ausgeformt ist, um den Rand (105) in der ersten Tiefe zu halten.

9. Deckel (100) gemäß Anspruch 8, wobei die Auflagefläche (305) einen ersten Abstand zu dem Rand (105) aufweist, wenn der Rand (105) bis zu der ersten Tiefe in das Gargefäß (605) eingeführt ist, und einen zweiten Abstand zu dem Rand (105) aufweist, wenn der Rand (105) bis zu der zweiten Tiefe in das Gargefäß (605) eingeführt ist, wobei der erste Abstand größer als der zweite Abstand ist.

10. Deckel (100) gemäß einem der vorangegangenen Ansprüche, wobei die Halteeinrichtung (115) eine Feder (205) ausformt.

11. Deckel (100) gemäß einem der vorangegangenen Ansprüche, wobei die Halteeinrichtung (115) eine weitere Feder (210) ausformt, wobei der Wrasenauslass (110) zwischen den Federn (205, 210) angeordnet ist.

12. Deckel (100) gemäß einem der vorangegangenen Ansprüche, wobei die Halteeinrichtung (115) ein Wrasenleitelement (215) aufweist, das die Federn (205, 210) verbindet

13. Gargerät (600) mit einem Gargefäß (605) und einem Deckel (100) gemäß einem der vorangegangenen Ansprüche.
